(19) Europäisches Patentamt
European Patent Office
Office européen des brevets

(11) Veröffentlichungsnummer: **0 084 106**
**B1**

(12) # EUROPÄISCHE PATENTSCHRIFT

(45) Veröffentlichungstag der Patentschrift: **10.09.86**

(21) Anmeldenummer: **82111168.9**

(22) Anmeldetag: **02.12.82**

(51) Int. Cl.⁴: **C 08 L 75/08**, C 08 L 63/00, C 08 G 18/10, C 08 G 18/32 // (C08L75/08, 63:00),(C08L63/00, 75:08)

(54) **Härtbare Kunstharzmischungen und Mittel für härtbare Kunstharzmischungen auf Basis von präpolymeren Polyätherurethanharnstoffaminen und Epoxidharzen.**

(30) Priorität: **28.12.81 DE 3151592**

(43) Veröffentlichungstag der Anmeldung: **27.07.83 Patentblatt 83/30**

(45) Bekanntmachung des Hinweises auf die Patenterteilung: **10.09.86 Patentblatt 86/37**

(84) Benannte Vertragsstaaten: **AT BE CH DE FR GB IT LI NL SE**

(56) Entgegenhaltungen:
**EP-A- 0 039 834**
**FR-A- 2 156 910**
**FR-A- 2 196 365**
**US-A- 4 137 276**
**Die Akte enthält technische Angaben, die nach dem Eingang der Anmeldung eingereicht wurden und die nicht in dieser Patentschrift enthalten sind.**

(73) Patentinhaber: **SCHERING AKTIENGESELLSCHAFT Berlin und Bergkamen**
**Waldstrasse 14 Postfach 15 40**
**D-4709 Bergkamen (DE)**

(72) Erfinder: **Burba, Christian, Dr. Dipl.-Chem.**
**Gerh.-Hauptmann-Strasse 9**
**D-4715 Ascheberg-Herbern (DE)**
Erfinder: **Lucas, Hermann-Josef**
**Schlaunstrasse 20**
**D-4715 Ascheberg-Herbern (DE)**
Erfinder: **Neffgen, Bernd, Dr. Dipl.-Chem.**
**Köhlerstrasse 4**
**D-4714 Cappenberg (DE)**

**EP 0 084 106 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind härtbare Kunstharzmischungen, bestehend aus Umsetzungsprodukten aus präpolymeren Carbamidsäurearylestern und di- oder polyfunktionellen Aminverbindungen mit ≥ 2 aktiven Wasserstoffatomen pro Molekül und Glycidylverbindungen mit im Durchschnitt mehr als einer Epoxidgruppe pro Molekül.

Kunstharze auf Basis von Epoxidharzen, welche mit Polyaminen gehärtet werden, zeichnen sich in der Praxis durch eine Reihe von erwünschten Eigenschaften aus wie z. B. gute Haftfestigkeit auf organischen und anorganischen Substraten, gute Lösungsmittelbeständigkeit, hohe Resistenz gegenüber Chemikalieneinwirkungen. Infolge ihrer hohen Vernetzungsdichte sind amingehärtete Epoxidharze, vor allem auf Basis von Diphenylpropan und Epichlorhydrin, sprödhart mit Glasübergangsbereichen oberhalb 20 °C.

Auf allen Anwendungsgebieten, für die Schlag- und Stoßfestigkeit sowie eine hohe Flexibilität erforderlich ist, entsprechen diese Kunstharze jedoch noch nicht den Anforderungen der Praxis. Das gilt insbesondere für den Bausektor, wo es gilt, Schwundrisse in z. B. Beton dauerhaft zu überbrücken.

In gewissem Umfang ist durch Verringerung der Vernetzungsdichte eine interne und durch Weichmacherzusatz eine externe Erhöhung des Elastifizierungsgrades erzielbar.

Externe Elastifizierungsmittel wie z. B. Teer, Phthalsäureester, hochsiedende Alkohole, Vinylpolymere und ähnliche, sind nicht reaktiv und werden nicht in das Duromer-Netz-werk eingebaut. Sie bewirken durch Raumausfüllung nur eine Aufweitung.

Eine interne Elastifizierung läßt sich durch Reduzierung der Funktionalität des Härters erreichen.

Die seit langem und in erheblichem Umfang gebräuchlichen langkettigen, niedrigfunktionellen Aminoamide auf Basis dimerisierter Fettsäuren erreichen zwar ein befriedigendes Eigenschaftsbild weicher Härter von Epoxidharzen, sind aber auf bestimmten Gebieten nicht so einsetzbar, wie es wünschenswert wäre.

In der DE-AS 2 152 606 sind härtbare Kunststoffmischungen, bestehend aus a) bestimmten Glycidyläthern und b) bestimmten Carbamidsäurephenylestern aus präpolymeren Isocyanaten und Alkylphenolen und c) Polyaminen oder Polyaminoamiden beschrieben. Die Mischungen aus Carbamidsäurephenylester und Epoxidharzen weisen wegen der hohen Viskositäten der Einzelkomponenten jedoch eine für die Praxis zu große Endviskosität auf. Zur Herstellung der gebrauchsfertigen Mischung müssen daher Verdünnungsmittel zugegeben werden. Ein weiteres Problem besteht darin, daß aufgrund der sehr unterschiedlichen Äquivalentgewichte von Harz- und Härterkomponente verhältnismäßig große Harzanteile (Epoxid + Polyurethan) mit verhältnismäßig geringen Härteranteilen gemischt werden müssen, so daß die Homogenisierung — auch wegen der schlechten Mischbarkeit aufgrund des Viskositätsunterschiedes von Harz- und Härterkomponente — nicht ganz einfach ist und große Sorgfalt erfordert.

Gemäß der DE-OS 2 338 256 werden hochmolekulare aminterminierte Polyätherurethanharnstoffe durch Reaktion von freie Isocyanatgruppen enthaltenden Präpolymeren mit Aminen in stark verdünnten Lösungen hergestellt und anschließend mit Epoxidharzen ausgehärtet. Der Einsatz von Lösungsmitteln, insbesondere aromatischen Lösungsmitteln, ist in der Praxis sowohl vom technischen als auch gesundheitlichen Standpunkt aus nachteilig und unerwünscht; andererseits ist es aber für das o. a. Verfahren unerläßlich, da ansonsten Gelierung eintritt. Andererseits ist die Viskosität der lösungsmittelfreien Reaktionsprodukte, wie sie gemäß der DE-OS 2 338 256 gezielt hergestellt werden, für die Anwendung in der Praxis zu hoch.

In der DE-AS 2 418 041 wird ein Verfahren zur Herstellung von elastifizierten Formteilen und Flächengebilden beschrieben, gemäß welchem bestimmte Epoxidverbindungen umgesetzt werden mit Aminverbindungen, die durch Hydrolyse bestimmter präpolymerer Ketimine bzw. Enamine erhalten werden. Mit diesem Verfahren sind chemikalienfeste, gut haltende Duromere mit verbesserten Eigenschaften herstellbar. Bei der Hydrolyse der genannten Verbindungen werden jedoch Ketone oder Aldehyde frei, welche entfernt werden müssen.

Weiterhin ist eine noch weitere Verbesserung der Elastizität der gehärteten Produkte wünschenswert.

Aufgabe der vorliegenden Erfindung war es, diese Nachteile zu überwinden und härtbare Kunstharzmischungen zu finden, welche chemikalienfeste, gut haftende Überzüge, Klebstoffe, Flächengebilde, Dichtungsmassen und Formteile mit hoher Schlag- und Stoßfestigkeit sowie verbesserter Flexibilität ergeben.

Diese Aufgabe wird erfindungsgemäß gelöst durch härtbare Kunstharzmischungen, bestehend aus

A) einem Polyätherurethanharnstoffamin mit zwei oder mehr reaktiven Aminwasserstoffen pro Molekül, hergestellt durch Umsetzung von

1) di- oder polyfunktionellen Carbamidsäurearylestern auf Basis aliphatischer, cycloaliphatischer, alicyclischer und araliphatischer Isocyanate mit

2) mindestens einer di- und/oder polyfunktionellen Aminverbindung, welche

a) mindestens zwei reaktive Aminwasserstoffe pro Molekül enthält oder welche

b) mindestens einen reaktiven Aminwasserstoff und mindestens eine Azomethingruppe pro Molekül enthält,

in Abwesenheit von Lösungsmitteln bei Temperaturen von 40-100 °C, wobei, wenn Amine mit nur einer NH-Funktionalität eingesetzt werden, das Verhältnis von Amingruppen : Carbamidsäurearylestergruppen 1 : 1 beträgt und wobei, wenn Amine mit einer NH-Funktionalität von 2 eingesetzt werden, das Verhältnis von Amingruppen : Carbamidsäurearylestergruppen 1,8 : 1 bis 2 : 1 beträgt und wobei aus den Reaktionsprodukten von 1) mit 2 b) durch anschließende Hydrolyse der Azomethingruppe das Amin freigesetzt wird und

B) Glycidylverbindungen mit im Durchschnitt mehr als einer Epoxidgruppe pro Molekül und gegebenenfalls

C) üblichen Füllstoffen, Pigmenten, Reaktionsbeschleunigern, Viskositätsregulatoren und Additiven.

Weitere Ausführungen der vorliegenden Erfindung sind die Gegenstände der Ansprüche 2-5.

Die erfindungsgemäß mitverwendeten Aminkomponenten werden hergestellt durch Umsetzung von di- oder polyfunktionellen aliphatischen Carbamidsäure-Arylester mit einem Überschuß mindestens einer di- und/oder polyfunktionellen Aminverbindung mit ≥ 2 aktiven Aminwasserstoffatomen pro Molekül und/oder mit Aminverbindungen mit mindestens einem reaktiven Aminwasserstoff und mindestens einer Azomethin gruppe pro Molekül.

Die erfindungsgemäß mitzuverwendenden di- oder polyfunktionellen Carbamidsäure-Arylester können die nach an sich bekannten Verfahren hergestellten linearen oder verzweigten Hydroxyl- und Sulfhydrylgruppen enthaltenden Umsetzungsprodukte aus Polyalkylenpolyätherpolyolen und/oder Polyalkylenthioätherpolyolen mit Di- oder Polyisocyanaten im NCO/OH (SH)-Verhältnis von 1,5 bis 2,5 und anschließender Umsetzung der endständigen NCO-Gruppe mit den auf diesem Gebiet üblichen phenolischen Verkappungsmitteln verwendet werden.

Als lineare oder verzweigte Polyolkomponente mit mittleren Molekulargewichten zwischen 150-10 000, insbesondere 400-5 000, bevorzugt 1 000 bis 2 000, kommen infrage die Polyalkylenpolyätherpolyole, wie sie durch Copolymerisation, Blockcopolymerisation oder anionische Polymerisation von Alkylenoxiden wie insbesondere Äthylenoxiden, Propylenoxid, mit di- oder polyfunktionellen Alkoholen wie Äthandiol-(1,2), Propandiol-(1,3), Butandiol-(1,4) und insbesondere den höherfunktionellen Alkoholen wie 1,1,1-Trimethyloläthan, 1,1,1-Trimethylolpropan, Glycerin, 1,2,6-Hexantriol, oder mit Aminen wie Äthylendiamin und 1,6-Hexamethylendiamin als Starterkomponenten oder durch kationische Polymerisation und Copolymerisation cyclischer Äther wie Tetrahydrofuran, Äthylenoxid und Propylenoxid mit sauren Katalysatoren und durch Polykondensation von polykondensierbaren Glykolen wie Hexandiol-(1,6) in Gegenwart saurer Verätherungskatalysatoren erhalten werden.

Als Polyalkylenthioätherpolyole kommen vorzugsweise die Polykondensationsprodukte des Thiodiglykols mit sich und mit Diolen und/oder Polyolen, wie z. B. Hexandiol-(1,6), Triäthylenglykol, 2,2-Dimethyl-propandiol-(1,3) und 1,1,1-Trimethylolpropan, in Gegenwart saurer Verätherungskatalysatoren, wie Phosphorsäure und phosphorige Säure, in Betracht.

Als Polyacetal kommt das Polykondensationsprodukt aus Formaldehyd und Diolen und/oder Polyolen, wie Diäthylenglykol, Triäthylenglykol, Butandiol-(1,4), Hexandiol-(1,6), Thiodiglykol und 1,1,1-Trimethylolpropan, mit sauren Katalysatoren, wie Phosphorsäure und p-Toluolsulfonsäure in Betracht.

Als weitere Polyolkomponenten kommen die Additionsprodukte aus reaktive Mehrfachbindungen enthaltenden Verbindungen und Polyhydroxyl- und Sulfhydrylkomponenten wie z. B. Polyisobutylendiol, Polyisoprendiol, sowie die entsprechenden endständige SH-Gruppen enthaltenden Verbindungen in Betracht (vgl. US-PS 3 984 370).

Die genannten Hydroxyl- bzw. Sulfhydrylkomponenten werden in bekannter Weise mit di- oder polyfunktionellen Isocyanaten im NCO/OH-Verhältnis von 1,5-2,5, vorzugsweise 1,8-2,2, in an sich bekannter Weise zu den entsprechenden präpolymeren Verbindungen mit endständigen NCO-Gruppen umgesetzt.

Als geeignete Polyisocyanate seien z. B. genannt:

1,6-Hexamethylendiisocyanat, Isophorondiisocyanat, Xylylendiisocyanat, 2,4,4-(2,2,4)-Trimethyl-1,6-diisocyanato-hexan, 1-Methyl-2,4-(2,6)-diisocyanato-cyclohexan, Methylen-bis(4-cyclohexylisocyanat), das aus Dimerfettsäurediamin nach üblichen Methoden hergestellte Isocyanat.

Die endständigen NCO-Gruppen der di- oder polyfunktionellen präpolymeren Verbindungen werden anschließend mit den auf diesem Gebiet üblichen phenolischen Verkappungsmitteln in mindestens stöchiometrischen Mengen bei Temperaturen zwischen 50-120 °C, gegebenenfalls unter Verwendung von Katalysatoren umgesetzt.

Als phenolische Verkappungsmittel werden erfindungsgemäß Phenole und Alkylphenole bevorzugt, welche durch Alkylgruppen mit 1-18 C-Atomen substituiert sein können wie die Butylphenole, Tetramethylbutylphenole, Amylphenole, Hexylphenole, Heptylphenole und insbesondere die 4-Nonylphenol-Gemische verwendet.

Als erfindungsgemäß für die weitere Umsetzung mitzuverwendende di- und/oder polyfunktionelle Aminverbindungen kommen diprimäre, disekundäre und primär/sekundäre, aliphatische, cycloaliphatische, heterocyclische, araliphatische Amine sowie deren Kondensationsprodukte mit Carbonsäuren (Polyaminoamide) in Betracht. Diese Amine, welche gegebenenfalls substituiert sein können und mindestens 2 aktive Aminwasserstoffe pro Molekül aufweisen, werden im Verhältnis Amingruppe/verkappte NCO-Gruppe von 1,5-2,5, vorzugsweise 1,8-2,2, bei Temperaturen von 40-100 °C, vorzugsweise 60-80 °C, mit der Carbamidsäurearylestergruppen enthaltenden Komponente zu den

entsprechenden präpolymeren Aminverbindungen allein oder im Gemisch umgesetzt.

Es ist auch möglich, die Aminkomponente in größeren Mengen einzusetzen und nach erfolgter Reaktion den Überschuß durch z. B. Destillation zu entfernen. Die bei der Umsetzung freiwerdende Phenolkomponente kann in der Reaktionsmischung bleiben.

Als Aminverbindungen werden erfindungsgemäß eine oder mehrere der folgenden Verbindungen verwendet :

α) Amine der allgemeinen Formel

$$R—NH—R^1—NH—R \qquad I$$

mit R = geradkettiger oder verzweigter Alkylrest mit 1-4 C-Atomen oder H und

$R^1$ = aliphatischer, araliphatischer, cycloaliphatischer Alkylenrest, der gegebenenfalls substituiert sein kann, mit 2-20 C-Atomen, oder der Alkylenrest des Dimerfettsäurediamins und/oder durch Heteroatome unterbrochen sein kann insbesondere 1,2-Diaminopropan, und/oder

β) ein Amin der allgemeinen Formel

$$R^2—(R^3—NH—)_m—R^3—R^2 \qquad II$$

mit $R^2$ =

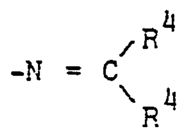

und $R^3$ = $—CH_2—CH_2—$ und/oder $—CH_2—CH_2—CH_2—$ mit $R^4$ gleich oder verschieden Methyl, Äthyl oder Isopropyl und m = 1 oder 2 und/oder

γ) ein Amin der allgemeinen Formel

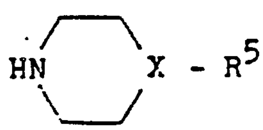 (III)

mit $R^5$ = H oder $—(CH_2)_k—R^2$ mit k = 2 oder 3

oder 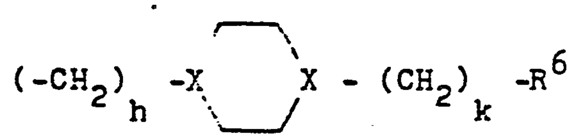

mit $R^6$ = —NHR oder $R^2$ und h = 0,1,2,3 und X = C oder N, und/oder

δ) Kondensationsprodukte dieser Amine mit Carbonsäuren wobei, wenn das Amin gemäß Formel II mit m = 1 und/oder das Amin gemäß Formel III mit $R^6 = R^2$ eingesetzt wird, das Verhältnis von Amingruppen : Carbamidsäurearylestergruppen 1 : 1 beträgt und wobei, wenn die Amine der Formel I, II mit m = 2, III mit $R^6$ = —NHR eingesetzt werden, das Verhältnis von Amingruppen : Carbamidsäurearylestergruppen 1,8 : 1 bis 2 : 1 beträgt und wobei aus den Verbindungen die Gruppe $R^2$ enthalten, durch Hydrolyse die Amingruppe freigesetzt wird.

Als Beispiele für die erfindungsgemäß verwendbaren Polyamine seien genannt :

Äthylendiamin, Diäthylentriamin, 1,2-Diaminopropan, 1,3-Diaminopropan, 1,3-Diaminobutan, 1,4-Diaminobutan, 3-(n-Isopropyl-amino)propylamin, Hexapropylenheptamin, 1-Cyclohexylamino-3-aminopropan, 1,4-Diaminocyclohexan, 1,3-Diaminocyclohexan, 2,4-Diaminocyclohexan, 1,3-Di(amino-cyclohexyl)propan, N,N'-Diäthyl-1,3-diaminopropan, N,N'-Diäthyl-1,4-diaminocyclohexan, N-Aminoäthylpiperazin, N-Aminopropylpiperazin, N-Aminobutylpiperazin, 1,3-Dipiperazinylpropan, 1,3-Dipiperidylpropan, 3-(2-aminoäthyl)-aminopropylamin, N,N'-bis-(3-aminopropyl)-äthylendiamin, die handelsüblichen primären aliphatischen Polyoxipropylendi- oder triamine, Phenylendiamin, 4,4'-Diamino-diphenylmethan sowie Ätherdiamine wie z. B. 1,7-Diamino-4-oxa-heptan, 1,7-Diamino-3,5-dioxa-heptan, 1,10-Diamino-4,7-dioxa-decan, 1,10-Diamino-4,7-dioxa-5-methyldecan, 1,11-Diamino-6-oxaundecan, 1,11-Diamino-4,8-dioxaundecan, 1,11-Diamino-4,8-dioxa-5-methyl-undecan, 1,11-Diamino-4,8-dioxa-5,6-dimethyl-7-propionyl-

undecan, 1,12-Diamino-4,9-dioxa-dodecan, 1,13-Diamino-4,10-dioxatridecan, 1,13-Diamino-4,7,10-trioxa-5,8-dimethyl-tridecan, 1,14-Diamino-4,11-dioxa-tetradecan, 1,14-Diamino-4,7,10-trioxatetradecan, 1,16-Diamino-4,7,10,13-tetraoxa-hexadecan, 1,20-Diamino-4,17-dioxa-eicosan und insbesondere Hexamethylendiamin, 3,3,5(3,5,5)-Trimethyl-hexamethylendiamin und 3,3'-Dimethyl-4,4'-diaminodicyclohexylmethan und insbesondere Isophorondiamin, N-Aminoäthylpiperazin, 1,2-Diaminopropan, Methylpentamethylendiamin, Xylylendiamin oder Mischungen dieser Amine.

Die erfindungsgemäß mitverwendeten Polyaminoamide sind Kondensationsprodukte aus Dicarbonsäuren wie z. B. Bernsteinsäure, Glutarsäure, Adipinsäure, Pimelinsäure, Suberinsäure, Azelainsäure, Sebazinsäure, Nonamethylendicarbonsäure, Dekamethylendicarbonsäure, durch Carbonylierung von ungesättigten Fettsäuren und überschüssigen Aminen erhaltene Dicarbonsäure, wie z. B. die oben angeführten Verbindungen.

Polyaminoamide und Imidazolingruppen enthaltende Polyaminoamide auf Basis von Monocarbonsäuren wie Essigsäure, Propionsäure, Buttersäure, Valerionsäure, Capronsäure, Caprylsäure, Myristinsäure, Palmitinsäure, Ölsäure, Linolsäure, Linolensäure sowie die natürlich vorkommenden tierischen und pflanzlichen Fettsäuren bzw. deren Ester und den o. a. Polyaminen, insbesondere aber den Polyalkylenpolyaminen wie Diäthylentriamin, Triäthylentetramin, Tetraäthylenpentamin können ebenfalls allein oder in Mischung eingesetzt werden.

Die erfindungsgemäß bevorzugten Amide sind Polyaminoamide und Imidazolingruppen enthaltende Polyaminoamide auf Basis dimerisierter Fettsäuren und überschüssiger Polyalkylenpolyaminen, wie sie als Härtungsmittel auf den Epoxidharzgebiet zum bekannten Stand der Technik gehören oder deren Mischungen mit den o. a. Aminen.

Neben den obengenannten erfindungsgemäß bevorzugten Härtungsmitteln können zur Modifizierung auch die auf diesem Gebiet üblichen aminischen Härtungsmittel für Epoxidharze mitverwendet werden.

Die erfindungsgemäß mitverwendeten Epoxidharze sind heiß und kalt mit diesen Härtern oder Härtermischungen härtbar. Sie enthalten im Durchschnitt mehr als eine Epoxidgruppe im Molekül und können Glycidyläther von mehrwertigen Alkoholen, wie z. B. Glycerin, Neopentylglykol, hydriertes Diphenylolpropan oder von mehrwertigen Phenolen, wie. z. B. Resorcin, Diphenylolpropan oder Phenol-Formaldehyd-Kondensaten sein. Es können auch die Glycidylester mehrwertiger Carbonsäuren, wie Hexahydrophthalsäure oder dimerisierte Fettsäuren verwendet werden. Die Epoxidwerte der genannten Verbindungen liegen etwa zwischen 0,2 bis 0,7, bevorzugt 0,4 bis 0,6.

Besonders bevorzugt ist der Einsatz von flüssigen Epoxidharzen auf Basis von Epichlorhydrin und Diphenylolpropan Diphenylolmethan mit einem Molekulargewicht von 340 bis 450.

Gegebenenfalls kann mit monofunktionellen Epoxidverbindungen die Viskosität der Mischungen gesenkt und dadurch die Verarbeitbarkeit verbessert werden. Beispiele hierfür sind aliphatische und aromatische Glycidyläther, wie Butylglycidyläther, Phenylglycidyläther oder Glycidylester, wie Glycidylacrylat oder Epoxide, wie Styroloxid.

Zur Formulierung einer Reaktionsmasse für die Beschichtung, Verklebung oder zum Verguß kommen die üblichen Füllstoffe auf mineralischer und organischer Basis, Pigmente, Weichmacher, Beschleuniger, andere auf dem Epoxidharzgebiet übliche Lösungsmittel und sonstige Zusatzmittel in Betracht.

Die erfindungsgemäßen härtbaren Mischungen eignen sich für Überzüge, Klebstoffe, Flächengebilde, Dichtungsmassen und Formteile auf allen Anwendungsgebieten, wo gute Haftung, Chemikalienbeständigkeit sowie hohe Schlag- und Stoßfestigkeit und verbesserte Flexibilität und Elastizität gefordert werden, wie z. B. auf dem Bausektor bei der rißüberbrückenden Fugenausfüllung.

Herstellung der Ausgangsmaterialien

A Herstellung der Polyätherurethancarbamidsäurearylester

Beispiel 1

Herstellung eines difunktionellen Polyäthers mit entständigen Carbamidsäure-(4-nonylphenylester)-gruppen

1 000 g eines linearen Polypropylenglykols der OH-Zahl 56,1 werden mit
222,3 g Isophorondiisocyanat versetzt. Nach Zugabe von
1,2 g Dibutylzinndilaurat wird die Mischung unter kräftigem Rühren auf 75 °C erwärmt und für 2,5 Stunden bei dieser Temperatur gehalten. Das Reaktionsprodukt hat einen Isocyanatgehalt von 3,4 %.

Zum auf 20-25 °C abgekühlten Isocyanatprepolymeren werden

0,3 g Zinkacetylacetonat und
215,7 g eines technischen 4-Nonyl-phenol-Gemisches mit verzweigten Nonylresten gegeben. Anschließend wird zwei Stunden unter Rühren auf 50 °C erhitzt. Das Produkt enthält danach praktisch kein Isocyanat und hat ca. 2,87 % blockierte NCO-Gruppen.

Beispiel 2

Herstellung eines trifunktionellen Polyäthers mit endständigen Carbamidsäure-(4-nonylphenylester)-gruppen

1 000 g eines verzweigten trifunktionellen Polypropylenglykols der OH-Zahl 35,6 werden mit 141 g Isophorondiisocyanat versetzt. Nach Zugabe von
1,2 g Dibutylzinndilaurat verfährt man wie unter A) und erhält ein Reaktionsprodukt mit einem Isocyanatgehalt von 2,2 %.

Zum auf 20-25 °C abgekühlten Isocyanatprepolymeren werden
0,3 g Zinkacetylacetonat und
131,1 g eines technischen 4-Nonyl-phenol-Gemisches mit verzweigten Nonylresten gegeben. Weiter verfährt man wie unter A) und erhält ein Produkt, das 1,95 % blockierte NCO-Gruppen und praktisch kein Isocyanat enthält.

Beispiel 3

Durchführung gemäß Beispiel 1 mit der Abänderung, daß als Verkappungsmittel 147,1 g p-tert.-Butylphenol eingesetzt werden.

Beispiel 4

Prepolymeres eines difunktionellen Polyäthers mit TMDI.

1 000 g eines linearen Polypropylenglykols der OH-Zahl 56,1 werden mit
210 g TMDI (2,4,4-(2,2,4)-Trimethylhexamethylendiisocyanat) analog Beispiel A 1) umgesetzt. Das Reaktionsprodukt hat einen Isocyanatgehalt von 3,47 %.

Analog Beispiel A 1) wird mit

215,7 g 4-Nonylphenol der entsprechenden Carbamidsäureester hergestellt. Das Produkt zeigt praktisch kein Isocyanat und hat ca. 2,9 % blockierte NCO-Gruppen.

Beispiel 5

250 g Polytetrahydrofuran mit einem Molgewicht von ca. 2 000 und einer OH-Zahl von 55,5 werden entsprechend Beispiel A 1) mit
54,95 g Isophorondiisocyanat umgesetzt. Das Reaktionsprodukt hat eine Isocyanatzahl von 38,8.
300 g dieses Umsetzungsproduktes werden mit
45,6 g eines technischen 4-Nonylphenol-Gemisches bei 50 °C 2 Stunden lang umgesetzt. Das Produkt enthält danach praktisch kein freies Isocyanat und hat ca. 2,52 % blockierte NCO-Gruppen.

Beispiel 6

1 000 g eines linearen Polyglykols, hergestellt durch Copolymerisation von Propylenglykol mit Propylenoxid und Äthylenoxid mit einem Molgewicht von ca. 2 000 und einer OH-Zahl von 55 werden mit
222,3 g Isophorondiisocyanat versetzt. Nach Zugabe von
1,2 g Dibutylzinndilaurat wird die Mischung unter kräftigem Rühren auf 75 °C erwärmt und für 2,5 Stunden bei dieser Temperatur gehalten. Das Reaktionsprodukt hat einen Isocyanatgehalt von 3,4 %.

Zum auf 20-25 °C abgekühlten Isocyanatprepolymeren werden
0,3 g Zinkacetylacetonat und
215,7 g eines technischen 4-Nonyl-phenol-Gemisches mit verzweigten Nonylresten gegeben. Anschließend wird 2 Stunden unter Rühren auf 50 °C erhitzt. Das Produkt enthält danach praktisch kein Isocyanat und hat ca. 2,87 % blockierte NCO-Gruppen.

Beispiel 7

1 000 g eines linearen Polypropylenglykols der OH-Zahl 56,1 werden mit
188 g XDI (Xylylendiisocyanat) analog Beispiel A 1) umgesetzt. Das Reaktionsprodukt hat einen. Isocyanatgehalt von 3,53 %. Durch Umsetzung mit
215,7 g 4-Nonylphenol wird der entsprechende Carbamidsäureester hergestellt. Das Produkt zeigt praktisch kein Isocyanat und hat ca. 2,98 % blockierte NCO-Gruppen.

B Herstellung der Polyätherurethanharnstoffamine

Beispiel 1

25,3 g 1,2 Diaminopropan werden auf 70 °C erhitzt und
250 g des unter A 1) hergestellten Produktes aus einem Tropftrichter innerhalb 6 h zugegeben, wobei die Temperatur auf 70 °C gehalten wird. Anschließend wird das überschüssige 1,2-Diaminopropan im Vakuum von 0,1 Torr und 70 °C abgezogen. Das Umsetzungsprodukt hat einen Gehalt an Amingruppen entsprechend 35 mg KOH/g (theoretisch 36,5).

Beispiel 2

59,5 g 1,2 Diaminopropan werden mit
1 176 g des unter A 1) hergestellten Produktes versetzt und die Mischung wird unter kräftigem Rühren auf 80 °C erwärmt und für 3,5 h bei dieser Temperatur gehalten.

Das Umsetzungsprodukt hat einen Gehalt an Amingruppen entsprechend 34,7 mg KOH/g.

Beispiel 3

26,9 g Trimethylhexamethyldiamin (TMD) werden mit
250 g des unter A 1) hergestellten Produktes wie in Beispiel 2 umgesetzt.

Das Umsetzungsprodukt hat einen Gehalt an Amingruppen entsprechend 38 mg KOH/g.

Beispiel 4

23,2 g m-Xylylendiamin (XDA) werden mit
250 g des unter A 1) hergestellten Produktes wie im Beispiel 2 umgesetzt.

Das Umsetzungsprodukt hat einen Gehalt an Amingruppen entsprechend 39 mg KOH/g.

Beispiel 5

29 g Isophorondiamin (IPD) werden mit
250 g des unter A 1) hergestellten Produktes wie im Beispiel 2 umgesetzt.

Das Umsetzungsprodukt hat einen Gehalt an Amingruppen entsprechend 39 mg KOH/g.

Beispiel 6

33,7 g p,p'-Diaminodiphenylmethan (MDA) werden mit
250 g des unter A 1) hergestellten Produktes versetzt und die Mischung unter kräftigen Rühren auf 100 °C erwärmt und 16 h bei dieser Temperatur gehalten.

Das Umsetzungsprodukt hat einen Gehalt an Amingruppen entsprechend 37 mg KOH/g.

Beispiel 7

23,4 g 1,2 Diaminopropan werden mit 340 g des unter A 2) hergestellten Produktes wie im Beispiel 1 umgesetzt. Das Umsetzungsprodukt hat einen Gehalt an Amingruppen entsprechend 22 mg KOH/g.

Beispiel 8

7,19 g Piperazin werden mit
180 g des unter A 2) hergestellten Produktes wie im Beispiel 2 umgesetzt. Das Umsetzungsprodukt hat einen Gehalt an Amingruppen entsprechend 26 mg KOH/g.

Beispiel 9

30 g 1,2-Diaminopropan werden analog Beispiel B 1) mit
250 g des unter A 4) hergestellten Produktes umgesetzt. Das Umsetzungsprodukt hat einen Gehalt an Amingruppen entsprechend 37,0 mg KOH/g (theoretisch 37,3).

Beispiel 10

35 g 1,2-Diaminopropan werden analog B 1) mit
250 g des unter A 7) hergestellten Produktes umgesetzt.

Das Umsetzungsprodukt hat einen Gehalt an Amingruppen entsprechend 38,0 mg KOH/g (theoretisch 37,9).

Beispiel 11

345,6 g des gemäß A 5) hergestellten Produktes werden mit
30,6 g 1,2-Diaminopropan analog Beispiel B 1) umgesetzt.

Das Umsetzungsprodukt hat einen Gehalt an Amingruppen entsprechend 26,9 mg KOH/g.

Beispiel 12

293,4 g des unter A 1) hergestellten Produktes werden mit
80 g eines imidazolingruppenhaltigen Aminoamids, auf Basis von Fettsäure und Triäthylentetramin, mit der Aminzahl von 420 umgesetzt. Das Umsetzungsprodukt hat einen Gehalt an Aminogruppen entsprechend 58 mg KOH/g.

C Herstellung der elastifizierten Epoxidharzmassen

Beispiel 1

85 Gew.-Teile eines Epoxidharzes auf Basis Bisphenol A und Epichlorhydrin mit einem Ep-Wert von 0,53 und einer Viskosität von ca. 13 Pas bei 25 °C wurden mit 15 Gew.-Teilen eines Glycidyläthers auf Basis von C-12 bis C-14-Fettalkoholen und Epichlorhydrin mit einem Ep-Wert von ca. 0,35 und einer Viskosität von ca. 10 mPas bei 25 °C verdünnt.

Diesem verdünnten Epoxidharz wurden 420 Gew.-Teile eines Polyätherurethanharnstoffamins nach Beispiel B 1) zugefügt sowie 28 Gew.-Teile 2,4,6-Tris-(dimethylaminomethyl)-phenol (DMP) und 1,6 Gew.-Teile 4-Nonylphenol (NP).

Diese Epoxidharzmasse wurde in Platten von 4 mm Dicke gegossen und bei 23 °C härten gelassen. Der Härteanstieg wurde bestimmt (Shore-Härte nach DIN 53 505) sowie nach 7 Tagen Härtung bei 23 °C Zugfestigkeit, Dehnung (DIN 53 455), und die Weiterreißfestigkeit (DIN 53 505).

Die ausgehärtete Masse ist klar-transparent und nahezu klebfrei an der Oberfläche.

Die Prüfung der folgenden Beispiele wurde wie in Beispiel 1 beschrieben durchgeführt. Die gemessenen Daten sind als Mittelwerte aus drei Prüfungen in der Tabelle zusammengefaßt.

Beispiel 2

100 Gew.-Teile des Epoxidgemisches aus Beispiel 1 wurden mit 372 Gew.-Teilen des Amins aus Beispiel B 3) versetzt sowie mit 16 Gew.-Teilen DMP und 29 Gew.-Teilen NP.

Beispiel 3

100 Gew.-Teile des Epoxidharzgemisches aus Beispiel 1 wurden mit 359 Gew.-Teilen des Amins aus Beispiel B 4) versetzt sowie mit 24 Gew.-Teilen DMP und 28 Gew.-Teilen NP.

Beispiel 4

80 Gew.-Teile eines Epoxidharzes auf Basis von Bisphenol A und Bisphenol F im Gewichtsverhältnis von 70/30 und Epichlorhydrin mit einem Ep-Wert von 0,54 und einer Viskosität von 7 Pas bei 25 °C wurden mit 20 Gew.-Teilen Dibutylphthalat verdünnt, dann mit 300 Gew.-Teilen des Amins aus Beispiel B6 versetzt sowie 20 Gew.-Teilen DMP und 32 Gew.-Teilen NP.

Beispiel 5

85 Gew.-Teile des Epoxidharzes aus Beispiel 1 wurden mit 15 Gew.-Teilen des Glycidyläthers aus Neopentylglykol und Epichlorhydrin mit einem Ep-Wert von 0,68 und einer Viskosität von 20 mPas/25 °C verdünnt. Dazu wurden 356 Gew.-Teile des Amins aus Beispiel B 5) und 24 Gew.-Teile DMP, 29 Gew.-Teile NP gemischt.

Beispiel 6

100 Gew.-Teile des Epoxidharzgemisches aus Beispiel 1 wurden mit 539 Gew.-Teilen des Amins aus

Beispiel B7) sowie 43 Gew.-Teilen DMP und 63 Gew.-Teilen NP gehärtet.

Beispiel 7

100 Gew.-Teile des Epoxidharzgemisches aus Beispiel 5 wurden mit 1 062 Gew.-Teilen des Amins aus Beispiel B 8) sowie 71 Gew.-Teilen DMP und 90 Gew.-Teilen NP umgesetzt.

Beispiel 8

100 Gew.-Teile des Epoxidharzes aus Beispiel C 1) wurden mit 272 Gew.-Teilen Amin aus Beispiel B 1), 4,7 Gew.-Teilen Isophorondiamin, 18,3 Gew.-Teilen DMP sowie 11,4 Gew.-Teilen NP versetzt. Nach Verdünnung mit 44 Gew.-Teilen Methylenchlorid/i-Propanol 1/1 wurde mit 110 Gew.-Teilen Calcit-Füllstoff einer mittleren Korngröße von ca. 20 µm homogen vermischt.

Beispiel 9

100 Gew.-Teile des Epoxidharzgemisches aus Beispiel C 1) wurden mit 155 Gew.-Teilen Amin nach Beispiel B 1), 30,5 Gew.-Teilen NP und 7 Gew.-Teilen DMP vermischt. Dazu wurden 58 Gew.-Teile eines Aminoamidimidazolin-Härters auf Basis dimerisierter Tallölfettsäure und Diäthylentriamin (Aminzahl ca. 280, Amin-Äquivalentmasse ca. 170, Viskosität 25 °C ca. 2 800 mPas) zugefügt.

Mit 49 Gew.-Teilen Methylenchlorid/i-Propanol 1/1 wurde verdünnt und dann mit 90 Gew.-Teilen Calcit (ca. 20 µm) sowie 10 Gew.-Teilen Titandioxid-Rutil gefüllt.

Beispiel 10

100 Gew.-Teile einer pigmentierten Kunstharzmasse wie in Beispiel C 8) wurden zusätzlich zu Thixotropierung mit 1 Gew.-Teil pyrogener Kieselsäure versetzt.

Vergleichsbeispiel

100 Gew.-Teile des Epoxidgemisches aus Beispiel C 1 wurden mit 400 Gew.-Teilen eines Carbamidsäurearylesters nach Beispiel A 1) gemischt. Dazu wurde als Härterkomponente ein Gemisch aus 20 Gew.-Teilen 1,2-Diaminopropan, 28 Gew.-Teilen DMP und 1,6 Gew.-Teilen NP gegeben.

Die ausgehärtete Masse ist milchigtrübe und an der Oberfläche stark klebrig.

(Siehe Tabelle Seite 10 f.)

Tabelle

| Beispiel | Härte Shore A/D nach 1 d | 2 d | 3 d | 7 d | 14 d | Zugfestigkeit N/mm² | Bruch-Dehnung % | Weiterreißfestigkeit N/mm |
|---|---|---|---|---|---|---|---|---|
| | bei 23 °C | | | | | | | |
| 1 | 46/9 | 52/11 | 55/12 | 54/11 | 53/11 | 2,6 | 460 | 6,0 |
| 2 | 65/16 | 71/20 | 73/21 | 73/20 | 73/21 | 4,4 | 360 | 13,0 |
| 3 | 82/31 | 88/36 | - | 88/36 | 88/36 | 3,6 | 150 | 18,0 |
| 4 | 75/21 | 84/27 | - | 93/36 | 94/40 | 4,3 | 105 | 18,0 |
| 5 | 83/30 | 87/33 | 88/36 | 89/36 | 89/37 | 6,5 | 385 | 30,0 |
| 6 | 33/6 | 35/7 | 36/7 | 38/7 | - | 1,1 | 220 | 3,0 |
| 7 | nm/nm | 3/nm | 10/nm | 10/nm | - | 0,1 | 650 | 1,0 |
| 8 | 55/11 | 63/15 | - | 70/17 | 72/17 | 3,4 | 323 | 8,0 |
| 9 | 17/1 | 50/10 | 55/12 | 64/15 | 65/15 | 2,8 | 203 | 6,0 |
| 10 | 17/1 | 52/11 | 58/14 | 65/16 | 65/16 | 2,9 | 167 | 6,0 |
| Vergl.-beisp. | nm/nm | 20/2 | 42/7 | 42/7 | 41/7 | 1,1 | 240 | 5,0 |

nm = nicht meßbar

**Patentansprüche** (für die Vertragsstaaten : BE, CH, DE, FR, GB, IT, LI, NL, SE)

1. Härtbare Kunstharzmischungen, bestehend aus

A) einem Polyätherurethanharnstoffamin mit zwei oder mehr reaktiven Aminwasserstoffen pro Molekül, hergestellt durch Umsetzung von

1) di- oder polyfunktionellen Carbamidsäurearylestern auf Basis aliphatischer, cycloaliphatischer, alicyclischer und araliphatischer Isocyanate mit

2) mindestens einer di- und/oder polyfunktionellen Aminverbindung, welche

a) mindestens zwei reaktive Aminwasserstoffe pro Molekül enthält oder welche

b) mindestens einen reaktiven Aminwasserstoff und mindestens eine Azomethingruppe pro Molekül enthält,

in Abwesenheit von Lösungsmitteln bei Temperaturen von 40-100 °C, wobei, wenn Amine mit einer NH-Funktionalität von 1 eingesetzt werden, das Verhältnis von Amingruppen : Carbamidsäurearylestergruppen 1 : 1 beträgt und wobei, wenn Amine mit einer NH-Funktionalität von 2 eingesetzt werden, das Verhältnis von Amingruppen : Carbamidsäurearylestergruppen 1,8 : 1 bis 2 : 1 beträgt und wobei aus den Reaktionsprodukten von 1) mit 2 b) durch anschließende Hydrolyse der Azomethingruppe das Amin freigesetzt wird und

B) Glycidylverbindungen mit im Durchschnitt mehr als einer Epoxidgruppe pro Molekül und gegebenenfalls

C) üblichen Füllstoffen, Pigmenten, Reaktionsbeschleunigern, Viskositätsregulatoren und Additiven.

2. Härthare Mischung gemäß Anspruch 1, dadurch gekennzeichnet, daß die Umsetzungsprodukte gemäß A 1) hergestellt werden aus

a) Polyalkylenpolyätherpolyolen mit einem mittleren Molekulargewicht zwischen 400-10 000, insbesondere 1 000 bis 2 000, und einem Überschuß eines

b) di- oder polyfunktionellen aliphatischen und/oder cycloaliphatischen Isocyanats, insbesondere Isophorondiisocyanat,

wobei das Verhältnis von NCO-Gruppen zu OH-Gruppen zwischen 1,5 bis 2,5 variiert werden kann und weitere Umsetzung des gebildeten NCO-Gruppen enthaltenden Präpolymeren mit

c) gegebenenfalls durch Alkylgruppen substituierten Phenolen, insbesondere p-Nonylphenol, wobei das PhOH/NCO-Verhältnis zwischen 1,0 bis 1,5 variiert werden kann.

3. Härtbare Kunstharzmischungen gemäß den Ansprüchen 1 und 2, dadurch gekennzeichnet, daß es sich bei den Komponenten gemäß A 2 um di- und/oder polyfunktionelle Aminverbindungen handelt, nämlich

α) Amine der allgemeinen Formel

$$R-NH-R^1-NH-R \qquad I$$

mit R = geradkettiger oder verzweigter bzw. substituierter Alkylrest mit 1-4 C-Atomen oder H und $R^1$ = aliphatischer, araliphatischer, cycloaliphatischer Alkylenrest, der gegebenenfalls substituiert sein kann, mit 2-20 C-Atomen, oder der Alkylenrest des Dimerfettsäurediamins und/oder durch Heteroatome unterbrochen sein kann insbesondere 1,2-Diaminopropan, und/oder

β) ein Amin der allgemeinen Formel

$$R^2-(R^3-NH-)-R^3-R^2 \qquad II$$

mit $R^2$ =

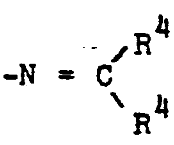

und $R^3$ = $-CH_2-CH_2-$ und/oder $-CH_2-CH_2-CH_2-$ mit $R^4$ gleich oder verschieden Methyl, Äthyl oder Isopropyl und m = 1 oder 2 und/oder

γ) ein Amin der allgemeinen Formel

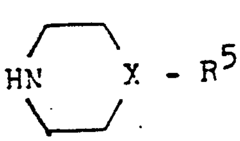

(III)

mit $R^5$ = H oder $-(CH_2)_k-R^2$ mit k = 2 oder 3

oder 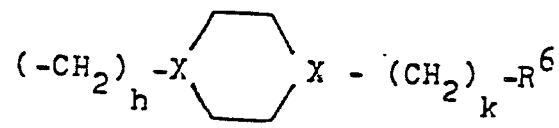

mit $R^6$ = —NHR oder $R^2$ und h = 0,1,2,3, und X = C oder N, und/oder

δ) Kondensationsprodukte der obengenannten Amine mit Carbonsäuren wobei, wenn das Amin gemäß Formel II mit m = 1 und/oder das Amin gemäß Formel III mit $R^6 = R^2$ eingesetzt wird, das Verhältnis von Amingruppen : Carbamidsäurearylestergruppen 1 : 1 beträgt und wobei, wenn die Amine der Formel I, II mit m = 2, III mit $R^6$ = —NHR eingesetzt werden, das Verhältnis von Amingruppen : Carbamidsäurearylestergruppen 1,8-2 : 1 beträgt und wobei aus den Verbindungen die Gruppe $R^2$ enthalten, durch Hydrolyse die Amingruppe freigesetzt wird.

4. Verfahren zur Herstellung von Polyätherurethanharnstoffaminen gemäß Anspruch 1 A) mit ≥ zwei reaktiven Aminwasserstoffen pro Molekül, dadurch gekennzeichnet, daß

1) di- oder polyfunktionelle Carbamidsäurearylester auf Basis aliphatischer, cycloaliphatischer, alicyclischer, araliphatischer Isocyanate mit

2) mindestens einer di- und/oder polyfunktionellen Aminverbindung, welche

a) mindestens zwei reaktive Aminwasserstoffe pro Molekül enthält oder welche

b) mindestens einen reaktiven Aminwasserstoff und mindestens eine Azomethingruppe pro Molekül enthält,

wobei, wenn Amine mit einer NH-Funktionalität von 1 eingesetzt werden, das Verhältnis von Amingruppen : Carbamidsäurearylestergruppen 1 : 1 beträgt und wobei, wenn Amine mit einer NH-Funktionalität von > 2 eingesetzt werden, das Verhältnis von Amingruppen : Carbamidsäurearylestergruppen 1,8 : 1 bis 2 : 1 beträgt.

5. Verfahren gemäß Anspruch 4, dadurch gekennzeichnet, daß die Aminverbindungen im Überschuß, vorzugsweise im Verhältnis von > 2 : 1 bis 4 : 1, bezogen auf reaktive Amingruppen und Carbamidsäurearylestergruppen, eingesetzt werden und das überschüssige Amin nach erfolgter Reaktion aus dem Reaktionsgemisch entfernt wird oder aber verbleibt.

**Patentansprüche** (für den Vertragsstaat AT)

1. Verfahren zur Herstellung von härtbaren Kunstharzmischungen nach an sich bekannten Verfahren aus

A) einem Polyätherurethanharnstoffamin mit zwei oder mehr reaktiven Aminwasserstoffen pro Molekül, hergestellt durch Umsetzung von

1) di- oder polyfunktionellen Carbamidsäurearylestern auf Basis aliphatischer, cycloaliphatischer, alicyclischer und araliphatischer Isocyanate mit

2) mindestens einer di- und/oder polyfunktionellen Aminverbindung, welche

a) mindestens zwei reaktive Aminwasserstoffe pro Molekül enthält oder welche

b) mindestens einen reaktiven Aminwasserstoff und mindestens eine Azomethingruppe pro Molekül enthält,

in Abwesenheit von Lösungsmitteln bei Temperaturen von 40-100 °C, wobei, wenn Amine mit einer NH-Funktionalität von 1 eingesetzt werden, das Verhältnis von Amingruppen : Carbamidsäurearylestergruppen 1 : 1 beträgt und wobei, wenn Amine mit einer NH-Funktionalität von 2 eingesetzt werden, das Verhältnis von Amingruppen : Carbamidsäurearylestergruppen 1,8 : 1 bis 2 : 1 beträgt und wobei aus den Reaktionsprodukten von 1) mit 2 b) durch anschließende Hydrolyse der Azomethingruppe das Amin freigesetzt wird und

B) Glycidylverbindungen mit im Durchschnitt mehr als einer Epoxidgruppe pro Molekül und gegebenenfalls

C) üblichen Füllstoffen, Pigmenten, Reaktionsbeschleunigern, Viskositätsregulatoren und Additiven.

2. Verfahren zur Herstellung von härtbaren Kunstharzmischungen gemäß Anspruch 1, dadurch gekennzeichnet, daß die Umsetzungsprodukte gemäß A 1) hergestellt werden aus

a) Polyalkylenpolyätherpolyolen mit einem mittleren Molekulargewicht zwischen 400-10 000, insbesondere 1 000 bis 2 000, und einem Überschuß eines

b) di- oder polyfunktionellen aliphatischen und/oder cycloaliphatischen Isocyanats, insbesondere Isophorondiisocyanat,

wobei das Verhältnis von NCO-Gruppen zu OH-Gruppen zwischen 1,5 bis 2,5 variiert werden kann und weitere Umsetzung des gebildeten NCO-Gruppen enthaltenden Präpolymeren mit

c) gegebenenfalls durch Alkylgruppen substituierten Phenolen, insbesondere p-Nonylphenol,

wobei das PhOH/NCO-Verhältnis zwischen 1,0 bis 1,5 variiert werden kann.

3. Verfahren zur Herstellung von härtbaren Kunstharzmischungen gemäß den Ansprüchen 1 und 2, dadurch gekennzeichnet, daß es sich bei den Komponenten gemäß A 2) um di- und/oder polyfunktionelle Aminverbindungen handelt, nämlich

α) Amine der allgemeinen Formel

$$R{-}NH{-}R^1{-}NH{-}R \qquad I$$

mit R = geradkettiger oder verzweigter bzw. substituierter Alkylrest mit 1-4 C-Atomen oder H und $R^1$ = aliphatischer, araliphatischer, cycloaliphatischer Alkylenrest, der gegebenenfalls substituiert sein kann, mit 2-20 C-Atomen, oder der Alkylenrest des Dimerfettsäurediamins und/oder durch Heteroatome unterbrochen sein kann insbesondere 1,2 Diaminopropan, und/oder

β) ein Amin der allgemeinen Formel

$$R^2{-}(R^3{-}NH)_m{-}R^3{-}R^2 \qquad II$$

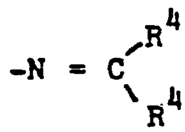

mit $R^2$ =
und $R^3$ = $-CH_2-CH_2-$ und/oder $-CH_2-CH_2-CH_2-$ mit $R^4$ gleich oder verschieden Methyl, Äthyl oder Isopropyl und m = 1 oder 2 und/oder

γ) ein Amin der allgemeinen Formel

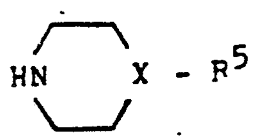 (III)

mit $R^5$ = H oder $-(CH_2)_k-R^2$ mit k = 2 oder 3

oder

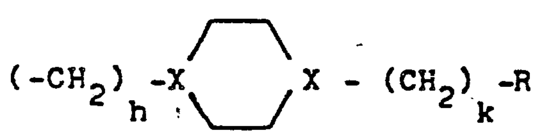

mit $R^6$ = —NHR oder $R^2$ und h = 0, 1, 2, 3 und X = C oder N, und/oder

δ) Kondensationsprodukten der obengenannten Amine mit Carbonsäuren

wobei, wenn das Amin gemäß Formel II mit m = 1 und/oder das Amin gemäß Formel III mit $R^6$ = $R^2$ eingesetzt wird, das Verhältnis von Amingruppen, Carbamidsäurearylestergruppen 1 : 1 beträgt und wobei, wenn die Amine der Formel I, II mit M = 2, III mit $R^6$ = —NHR eingesetzt werden, das Verhältnis von Amingruppen : Carbamidsäurearylestergruppen 1,8-2 : 1 beträgt und wobei aus den Verbindungen die Gruppe $R^2$ enthalten, durch Hydrolyse die Amingruppe freigesetzt wird.

4. Verfahren zur Herstellung von Polyätherurethanharnstoffaminen gemäß Anspruch 1 A) mit ≥ zwei reaktiven Aminwasserstoffen pro Molekül, dadurch gekennzeichnet, daß

1) di- oder polyfunktionelle Carbamidsäurearylester auf Basis aliphatischer, cycloaliphatischer, alicyclischer, araliphatischer Isocyanate mit

2) mindestens einer di- und/oder polyfunktionellen Aminverbindung, welche

a) mindestens zwei reaktive Aminwasserstoffe pro Molekül enthält oder welche

b) mindestens einen reaktiven Aminwasserstoff und mindestens eine Azomethingruppe pro Molekül enthält,

wobei, wenn Amine mit einer NH-Funktionalität von 1 eingesetzt werden, das Verhältnis von Amingruppen : Carbamidsäurearylestergruppen 1 : 1 beträgt und wobei, wenn Amine mit einer NH-Funktionalität von 2 eingesetzt werden, das Verhältnis von Amingruppen : Carbamidsäurearylestergruppen 1,8 : 1 bis 2 : 1 beträgt.

5. Verfahren gemäß Anspruch 4, dadurch gekennzeichnet, daß die Aminverbindungen im Überschuß vorzugsweise im Verhältnis von > 2 : 1 bis 4 : 1, bezogen auf reaktive Amingruppen und Carbamidsäurearylestergruppen, eingesetzt werden und das überschüssige Amin nach erfolgter Reaktion aus dem Reaktionsgemisch entfernt wird oder aber verbleibt.

**Claims** (for the Contracting States : BE, CH, DE, FR, GB, IT, LI, NL, SE)

1. Hardenable synthetic resin mixtures, consisting of

A) a polyetherurethaneurea amine with two or more reactive amine hydrogen atoms per molecule, prepared by the reaction of

1) di- or polyfunctional carbamic acid aryl esters derived from aliphatic, cyclo-aliphatic, alicyclic and araliphatic isocyanates with

2) at least one di- and/or polyfunctional amine compound, which

a) contains at least two reactive amine hydrogen atoms per molecule or which

b) contains at least one reactive amine hydrogen atom and at least one azomethine group per molecule

in the absence of solvents at temperatures of 40-100 °C whereby if amines with a NH-functionality of 1 are used, the ratio of amine groups to carbamic acid aryl ester groups is 1 : 1, and where in the case that amines with a NH-functionality of 2 are used, the ratio of amine groups to carbamic acid aryl ester groups is 1.8 : 1 to 2 : 1, and whereby in the case of reaction products of 1) and 2b), the amine is liberated by subsequent hydrolysis of the azomethine group, and

B) glycidyl compounds with an average of more than one epoxide group per molecule, and optionally

C) fillers, pigments, reaction accelerators, viscosity regulators and additives.

2. Hardenable mixture according to Claim 1 characterised in that the reaction products according to A1) are prepared from

a) polyalkylenepolyetherpolyols with a mean molecular weight of 400-10 000, preferably 1 000-2 000, and an excess of a

b) di- or polyfunctional aliphatic and/or cycloaliphatic isocyanate, preferably isophorone diisocyanate.

wherein the ratio of NCO-groups to OH-groups may be between 1.5 and 2.5, and the so-formed prepolymer containing NCO groups is reacted with

c) phenols optionally substituted with alkyl groups, preferably p-nonyl phenol, wherein the PhOH/NCO ratio may be between 1.0 and 1.5.

3. Hardenable synthetic resin mixtures according to Claims 1 and 2 characterised in that the components according to A2) are di- and/or polyfunctional amine compounds, namely

a) amines of the general formula

$$R—NH—R^1—NH—R \qquad I$$

wherein R = straight chain or branched or substituted alkyl group with 1-4 C atoms or H, and $R^1$ = aliphatic, araliphatic or cycloaliphatic alkylene group, which may be optionally substituted, with 2-20 C atoms, or the alkylene group of dimeric fatty acid diamine which can be interspersed by hetero-atoms, especially 1,2 diaminopropane, and/or

b) an amine of the general formula

$$R^2—(R^3—NH—)_m—R^3—R^2 \qquad II$$

wherein $R^2$ =

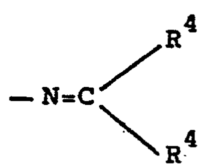

wherein $R^3$ = $—CH_2—CH_2—$ and/or $—CH_2—CH_2—CH_2—$ wherein $R^4$, which may be the same or different, are methyl, ethyl or isopropyl

and m = 1 or 2, and/or

c) an amine of the general formula

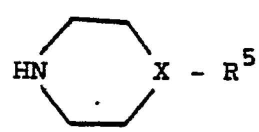

(III)

wherein $R^5$ = H or $—(CH_2)_k—R^2$ and k = 2 or 3, or

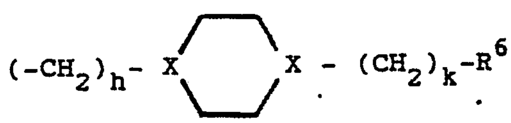

wherein $R^6$ = —NHR or $R^2$, h = 0, 1, 2, 3 and X = C or N, and/or

d) condensation products of the above-named amines with carboxylic acids

whereby if the amine according to Formula II with m = 1 and/or the amine according to Formula III with $R^6 = R^2$ is used, the ratio of amine groups : carbamic acid aryl ester groups is 1 : 1, and whereby if the amines of Formula I, Formula II with m = 2, or Formula III with $R^6$ = —NHR are used, the ratio of amine groups : carbamic acid aryl ester groups is 1.8-2:1 and whereby the amine group is liberated by hydrolysis from those compounds which contain the $R^2$ group.

4. Processes for the preparation of polyetherurethaneurea amines according to Claim 1A) with at least two reactive amine hydrogen atoms per molecule, characterised in that

1) di- or polyfunctional carbamic acid aryl esters derived from aliphatic, cycloaliphatic, alicyclic or araliphatic isocyanates with

2) at least one di- and/or polyfunctional amine compound which

a) contains at least two reactive amine hydrogen atoms per molecule or which

b) contains at least one reactive amine hydrogen atom and at least one azomethine group per molecule

whereby if amines with a NH-functionality of 1 are used, the ratio of amine groups : carbamic acid aryl ester groups is 1 : 1, and whereby if amines with NH-functionality of 2 are used, the ratio of amine groups : carbamic acid aryl ester groups is 1.8 : 1 to 2 : 1.

5. Processes according to Claim 4 characterised in that the amine compounds used are in excess, preferably in a ratio from > 2 : 1 to 4 : 1, relative to reactive amine groups and to carbamic acid aryl ester groups, and that excess amine is removed from the reaction mixture or allowed to remain after the reaction has been effected.

**Claims** (for the Contracting State AT)

1. Process for the preparation of hardenable synthetic resin mixtures, according to known methods, from

A) a polyetherurethaneurea amine with two or more reactive amine hydrogen atoms per molecule, prepared by the reaction of

1) di- or polyfunctional carbamic acid aryl esters derived from aliphatic, cyclo-aliphatic, alicyclic and araliphatic isocyanates with

2) at least one di- and/or polyfunctional amine compound, which

a) contains at least two reactive amine hydrogen atoms per molecule or which

b) contains at least one reactive amine hydrogen atom and at least one azomethine group per molecule

in the absence of solvents at temperatures of 40-100 °C whereby if amines with a NH-functionality of 1 are used, the ratio of amine groups to carbamic acid aryl ester groups is 1 : 1, and where in the case that amines with a NH-functionality of 2 are used, the ratio of amine groups to carbamic acid aryl ester groups is 1.8 : 1 to 2 : 1, and whereby in the case of reaction products of 1) and 2b), the amine is liberated by subsequent hydrolysis of the azomethine group, and

B) glycidyl compounds with an average of more than one epoxide group per molecule, and optionally

C) fillers, pigments, reaction accelerators, viscosity regulators and additives.

2. Process for the preparation of hardenable synthetic resin mixtures according to Claim 1 characterised in that the reaction products according to A1) are prepared from

a) polyalkylenepolyetherpolyols with a mean molecular weight of 400-10 000, preferably 1 000-2 000, and an excess of a

b) di- or polyfunctional aliphatic and/or cycloaliphatic isocyanate, preferably isophorone diisocyanate.

wherein the ratio of NCO-groups to OH-groups may be between 1.5 and 2.5, and the so-formed prepolymer containing NCO groups is reacted with

c) phenols optionally substituted with alkyl groups, preferably p-nonyl phenol, wherein the PhOH/NCO ratio may be between 1.0 and 1.5.

3. Process for the preparation of hardenable synthetic resin mixtures according to Claims 1 and 2 characterised in that the components according to A2) are di- and/or polyfunctional amine compounds, namely

a) amines of the general formula

$$R—NH—R^1—NH—R \qquad I$$

wherein R = straight chain or branched or substituted alkyl group with 1-4 C atoms or H, and $R^1$ = aliphatic, araliphatic or cycloaliphatic alkylene group, which may be optionally substituted, with 2-20 C atoms, or the alkylene group of dimeric fatty acid diamine which can be interspersed by hetero-atoms, especially 1,2 diaminopropane, and/or

b) an amine of the general formula

$R^2—(R^3—NH—)_m—R^3—R^2$ II

wherein $R^2$ =

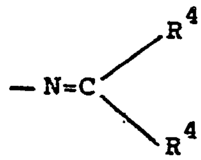

wherein $R^3$ = $—CH_2—CH_2—$ and/or $—CH_2—CH_2—CH_2—$
wherein $R^4$, which may be the same or different, are methyl, ethyl or isopropyl and m = 1 or 2, and/or

c) an amine of the general formula

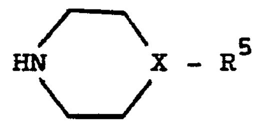

(III)

wherein $R^5$ = H or $—(CH_2)_k—R^2$ and k = 2 or 3, or

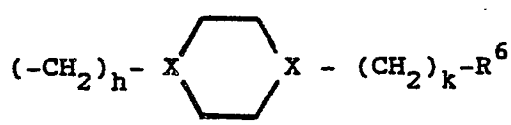

wherein $R^6$ = —NHR or $R^2$, h = 0,1,2,3 and X = C or N, and/or

d) condensation products of the above-named amines with carboxylic acids

whereby if the amine according to Formula II with m = 1 and/or the amine according to Formula III with $R^6$ = $R^2$ is used, the ratio of amine groups : carbamic acid aryl ester groups is 1 : 1, and whereby if the amines of Formula I, Formula II with m = 2, or Formula III with $R^6$ = —NHR are used, the ratio of amine groups : carbamic acid aryl ester groups is 1.8-2 : 1 and whereby the amine group is liberated by hydrolysis from those compounds which contain the $R^2$ group.

4. Processes for the preparation of polyetherurethaneurea amines according to Claim 1A) with at least two reactive amine hydrogen atoms per molecule, characterised in that

1) di- or polyfunctional carbamic acid aryl esters derived from aliphatic, cycloaliphatic, alicyclic or araliphatic isocyanates with

2) at least one di- and/or polyfunctional amine compound which

a) contains at least two reactive amine hydrogen atoms per molecule or which

b) contains at least one reactive amine hydrogen atom and at least one azomethine group per molecule

whereby if amines with a NH-functionality of 1 are used, the ratio of amine groups : carbamic acid aryl ester groups is 1 : 1, and whereby if amines with NH-functionality of 2 are used, the ratio of amine groups : carbamic acid aryl ester groups is 1.8 : 1 to 2 : 1.

5. Processes according to Claim 4 characterised in that the amine compounds used are in excess, preferably in a ratio from > 2 : 1 to 4 : 1, relative to reactive amine groups and to carbamic acid aryl ester groups, and that excess amine is removed from the reaction mixture or allowed to remain after the reaction has been effected.

**Revendications** (pour les Etats contractants : BE, CH, DE, FR, GB, IT, LI, NL, SE)

1. Mélanges durcissables à base de résines synthétiques, mélanges qui sont constitués :

A) d'une poly-éther-uréthanne-urée-amine contenant 2 ou plus de 2 hydrogènes aminés réactifs par molécule, que l'on a préparée en faisant réagir :

1) des carbamates d'aryles di- ou poly-fonctionnels à base d'isocyanates aliphatiques, cycloaliphatiques, alicycliques ou araliphatiques avec

2) au moins un composé aminé di- et/ou poly-fonctionnel qui contient :

a) au moins deux hydrogènes aminés réactifs par molécule ou

b) au moins un hydrogène aminé réactif et au moins un radical azométhinique par molécule, en l'absence de solvant, à des températures de 40 à 100 °C, le rapport des radicaux amino aux radicaux carbamates d'aryles étant de 1 : 1 lorsqu'on utilise des amines n'ayant qu'une fonctionnalité NH et étant compris entre 1,8 : 1 et 2 : 1 lorsqu'on utilise des amines ayant une fonctionnalité NH égale à 2, et l'amine étant libérée, à partir des produits réactionnels de 1) avec 2b), par hydrolyse ultérieure du radical azométhinique,

B) de composés glycidyliques contenant en moyenne plus d'un radical époxy par molécule, et éventuellement

C) de charges, de pigments, d'accélérateurs de réaction, de régulateurs de viscosité et d'additifs usuels.

2. Mélanges durcissables selon la revendication 1, caractérisés en ce que les produits de réaction selon A1) ont été préparés à partir :

a) de polyalkylène-polyéther-polyols ayant une masse moléculaire moyenne comprise entre 400 et 10 000, plus spécialement entre 1 000 et 2 000, et

b) d'un excès d'un isocyanate di- ou poly-fonctionnel aliphatique ou cycloaliphatique, plus particulièrement de di-isocyanato-isophorone,

le rapport des radicaux —NCO aux radicaux —OH pouvant varier entre 1,5 et 2,5, le prépolymère formé contenant des radicaux —NCO ayant ensuite été mis à réagir avec :

c) des phénols éventuellement porteurs de radicaux alkyles, plus particulièrement le nonyl-4 phénol, le rapport PhOH/NCO pouvant varier entre 1,0 et 1,5.

3. Mélanges durcissables à base de résines synthétiques selon l'une des revendications 1 et 2, caractérisés en ce que les composantes selon A2) sont des composés aminés di- et/ou poly-fonctionnels, en l'espèce :

α) des amines répondant à la formule générale I :

$$R—NH—R^1—NH—R \qquad (I)$$

dans laquelle R représente un radical alkyle, linéaire ou ramifié, contenant de 1 à 4 atomes de carbone, éventuellement substitué, ou représente H, et $R^1$ représente un radical alkylène aliphatique, araliphatique ou cycloaliphatique contenant de 2 à 20 atomes de carbone, qui peut éventuellement être substitué, ou le radical alkylène de la diamine dérivant de l'acide gras dimère, et/ou qui peut être interrompu par des hétéroatomes, plus particulièrement le diamino-1,2 propane, et/ou

β) une amine répondant à la formule générale II :

$$R^2—(R^3—NH—)_m—R^3—R^2 \qquad (II)$$

dans laquelle $R^2$ représente un radical

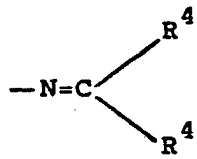

dont les symboles $R^4$ représentent chacun, indépendamment l'un de l'autre, un radical méthyle, éthyle ou isopropyle, $R^3$ représente $—CH_2—CH_2—$ et/ou $—CH_2—CH_2—CH_2—$ et m est égal à 1 ou à 2, et/ou

γ) une amine répondant à la formule générale III :

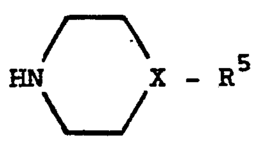

(III)

dans laquelle $R^5$ représente H, un radical $—(CH_2)_k—R^2$ dans lequel k est égal à 2 ou à 3, ou un radical

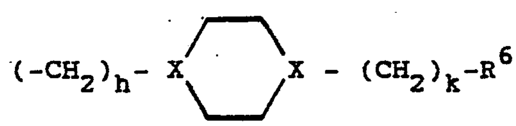

où $R^6$ représente —NHR ou $R^2$ et h est égal à 0, à 1, à 2 ou à 3, et X représente C ou N, et/ou

δ) des produits de condensation des amines mentionnées ci-dessus avec des acides carboxyliques, le rapport entre les radicaux amino et les radicaux de carbamates d'aryles étant égal à 1 : 1 lorsqu'on se sert d'une amine de formule II dans laquelle m est égal à 1 et/ou d'une amine de formule III dans laquelle $R^6 = R^2$, et étant compris entre 1,8 : 1 et 2 : 1 lorsqu'on se sert d'amines de formule I, de formule II avec m = 2 ou de formule III avec $R^6$ = —NHR, et, dans les composés contenant le radical $R^2$, le radical amino étant libéré par hydrolyse.

4. Procédé de préparation de polyéther-uréthanne-urée-amines selon la revendication 1A) contenant au moins deux hydrogènes aminés réactifs par molécule, procédé caractérisé en ce qu'on fait réagir :

1) des carbamates d'aryles di- ou poly-fonctionnels à base d'isocyanates aliphatiques, cycloaliphatiques, alicycliques ou araliphatiques, avec

2) au moins un composé amino di- et/ou poly-fonctionnel qui contient :

a) au moins deux hydrogènes aminés réactifs par molécule ou

b) au moins un hydrogène aminé réactif et au moins un radical azométhinique par molécule, le rapport entre les radicaux amino et les radicaux de carbamates d'aryles étant égal à 1 : 1 dans le cas où l'on utilise des amines ayant une fonctionnalité NH égale à 1, et étant compris entre 1,8 : 1 et 2 : 1 dans le cas où l'on utilise des amines ayant une fonctionnalité NH égale à 2.

5. Procédé selon la revendication 4 caractérisé en ce que les composés aminés sont mis en jeu en excès, de préférence dans un rapport supérieur à 2 : 1 et pouvant aller jusqu'à 4 : 1 relativement aux radicaux amino réactifs et aux radicaux de carbamates d'aryles, et l'excès d'amine, lorsque la réaction est terminée, est éliminé du mélange réactionnel ou y est laissé.

**Revendications** (pour l'Etat contractant AT)

1. Procédé de préparation de mélanges durcissables à base de résines synthétiques, par des méthodes connues, à partir :

A) d'une poly-éther-uréthanne-urée-amine contenant 2 ou plus de 2 hydrogènes aminés réactifs par molécule, que l'on a préparée en faisant réagir :

1) des carbamates d'aryles di- ou poly-fonctionnels à base d'isocyanates aliphatiques, cycloaliphatiques, alicycliques ou araliphatiques, avec

2) au moins un composé aminé di- et/ou poly-fonctionnel qui contient :

a) au moins deux hydrogènes aminés réactifs par molécule ou

b) au moins un hydrogène aminé réactif et au moins un radical azométhinique par molécule, en l'absence de solvant, à des températures de 40 à 100 °C, le rapport des radicaux amino aux radicaux carbamates d'aryles étant de 1 : 1 lorsqu'on utilise des amines n'ayant qu'une fonctionnalité NH et étant compris entre 1,8 : 1 et 2 : 1 lorsqu'on utilise des amines ayant une fonctionnalité NH égale à 2, et l'amine étant libérée, à partir des produits réactionnels de 1) avec 2b), par hydrolyse ultérieure du radical azométhinique,

B) de composés glycidyliques contenant en moyenne plus d'un radical époxy par molécule, et éventuellement

C) de charges, de pigments, d'accélérateurs de réaction, de régulateurs de viscosité et d'additifs usuels.

2. Procédé de préparation de mélanges durcissables à base de résines synthétiques selon la revendication 1, procédé caractérisé en ce qu'on prépare les produits de réaction selon A1) à partir :

a) de polyalkylène-polyéther-polyols ayant une masse moléculaire moyenne comprise entre 400 et 10 000, plus spécialement entre 1 000 et 2 000, et

b) d'un excès d'un isocyanate aliphatique et/ou cycloaliphatique di- ou poly-fonctionnel, plus particulièrement la di-isocyanato-isophorone,

le rapport des radicaux —NCO aux radicaux —OH pouvant varier entre 1,5 et 2,5, le prépolymère formé contenant des radicaux —NCO ayant ensuite été mis à réagir avec :

c) de phénols éventuellement porteurs de radicaux alkyles, plus particulièrement le nonyl-4 phénol, le rapport PhOH/NCO pouvant varier entre 1,0 et 1,5.

3. Procédé de préparation de mélanges durcissables à base de résines synthétiques selon l'une des revendications 1 et 2, procédé caractérisé en ce que les composantes selon A2) sont des composés aminés di- et/ou poly-fonctionnels, en l'espèce :

α) des amines répondant à la formule générale I :

$$R—NH—R^1—NH—R \qquad (I)$$

dans laquelle R représente un radical alkyle, linéaire ou ramifié, contenant de 1 à 4 atomes de carbone, éventuellement substitué, ou représente H, et $R^1$ représente un radical alkylène aliphatique, araliphatique ou cycloaliphatique contenant de 2 à 20 atomes de carbone, qui peut éventuellement être substitué, ou le radical alkylène de la diamine dérivant de l'acide gras dimère, et/ou qui peut être interrompu par des hétéroatomes, plus particulièrement le diamino-1,2 propane, et/ou

β) une amine répondant à la formule générale II :

$$R^2—(R^3—NH—)_m—R^3—R^2 \qquad (II)$$

dans laquelle $R^2$ représente un radical

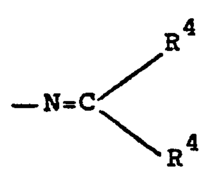

dont les symboles $R^4$ représentent chacun, indépendamment l'un de l'autre, un radical méthyle, éthyle ou

isopropyle, $R^3$ représente $-CH_2-CH_2-$ et/ou $-CH_2-CH_2-CH_2-$ et m est égal à 1 ou à 2, et/ou

γ) une amine répondant à la formule générale III :

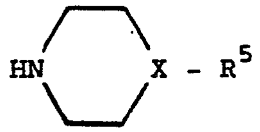

(III)

dans laquelle $R^5$ représente H, un radical $-(CH_2)_k-R^2$ dans lequel k est égal à 2 ou à 3, ou un radical

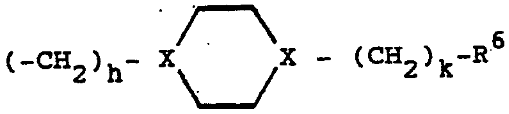

où $R^6$ représente —NHR ou $R^2$ et h est égal à 0, à 1, à 2 ou à 3, et X représente C ou N, et/ou

δ) des produits de condensation des amines mentionnées ci-dessus avec des acides carboxyliques,

le rapport entre les radicaux amino et les radicaux de carbamates d'aryles étant égal à 1 : 1 lorsqu'on se sert d'une amine de formule II dans laquelle m est égal à 1 et/ou d'une amine de formule III dans laquelle $R^6 = R^2$, et étant compris entre 1,8 : 1 et 2 : 1 lorsqu'on se sert d'amines de formule I, de formule II avec m = 2 ou de formule III avec $R^6$ = —NHR, et, dans les composés contenant le radical $R^2$, le radical amino étant libéré par hydrolyse.

4. Procédé de préparation de polyéther-uréthanne-urée-amines selon la revendication 1A) contenant au moins 2 hydrogènes aminés réactifs par molécule, procédé caractérisé en ce qu'on fait réagir :

1) des carbamates d'aryles di- ou poly-fonctionnels à base d'isocyanates aliphatiques, cycloaliphatiques, alicycliques ou araliphatiques, avec

2) au moins un composé amino di- et/ou poly-fonctionnel qui contient :

a) au moins deux hydrogènes aminés réactifs par molécule ou

b) au moins un hydrogène aminé réactif et au moins un radical azométhinique par molécule,

le rapport entre les radicaux amino et les radicaux de carbamates d'aryles étant égal à 1 : 1 dans le cas où l'on utilise des amines ayant une fonctionnalité NH égale à 1, et étant compris entre 1,8 : 1 et 2 : 1 dans le cas où l'on utilise des amines ayant une fonctionnalité NH égale à 2.

5. Procédé selon la revendication 4 caractérisé en ce que les composés aminés sont mis en jeu en excès, de préférence dans un rapport supérieur à 2 : 1 et pouvant aller jusqu'à 4 : 1 relativement aux radicaux amino réactifs et aux radicaux de carbamates d'aryles, et l'excès d'amine, lorsque la réaction est terminée, est éliminé du mélange réactionnel ou y est laissé.